# FASCICULE DE BREVET EUROPEEN

(11) **EP 2 257 672 B1**
(45) Date de publication et mention de la délivrance du brevet: **20.06.2012**
(21) Numéro de dépôt: 09729172.8
(22) Date de dépôt: 25.03.2009
(51) Int. Cl.: E01B 9/18, F16B 13/00

(54) **GAINE, NOTAMMENT PERMETTANT LA MISE EN PLACE D ' UN TIRE-FOND DE FIXATION D ' UN RAIL FERROVIAIRE DANS UNE TRAVERSE DE VOIE FERREE**
DÜBEL, INSBESONDERE ZUR ERMÖGLICHUNG DES EINDREHENS EINER SCHWELLENSCHRAUBE, DIE AN EINE EISENBAHNSCHIENE ANGEBRACHT WIRD, IN EINE EISENBAHNSCHWELLE
DOWEL, PARTICULARLY ONE TO ALLOW A SLEEPER SCREW USED TO ATTACH A RAILWAY RAIL TO BE SCREWED INTO A RAILWAY SLEEPER

(30) Priorité: 01.04.2008 FR 0801780; 29.04.2008 US 48565
(43) Date de publication de la demande: 08.12.2010
(73) Titulaire: Vape Rail International, 01102 Oyonnax Cedex (FR)
(72) Inventeur: MAHIKIAN, Edmond, F-01000 Bourg En Bresse (FR)
(74) Mandataire: Jeannet, Olivier
(86) Numéro de dépôt international: PCT/IB2009/051238
(87) Numéro de publication internationale: WO 2009/122326

(56) Documents cités:
- EP-A- 0 678 677
- EP-A- 1 116 826
- DE-A1- 4 006 506
- FR-A- 2 840 928
- GB-A- 938 011
- US-A- 5 000 222

## Description

La présente invention concerne une gaine permettant la mise en place d'un organe de fixation dans une paroi, notamment la mise en place d'un tire-fond de fixation d'un rail ferroviaire dans une traverse de voie ferrée, selon le préambule de la revendication 1.

Il est bien connu de fixer un rail ferroviaire à une traverse de voie ferrée au moyen d'un tire-fond, ce tire-fond étant vissé dans une gaine solidaire de la traverse. La gaine est généralement en matière synthétique et comprend un filet apte à coopérer avec le filet du tire-fond.

Un problème existant avec ce type de gaine est le risque d'introduction dans la gaine d'un corps étranger (gravillon(s) ou eau de ruissellement) pendant la période de temps séparant l'installation de la traverse et la mise en place du tire-fond. Ce corps étranger peut, lors de la mise en place du tire-fond, conduire à une fissuration, voire à un éclatement, du bois ou du béton constituant la traverse.

Un problème similaire est celui de l'insertion d'eau de ruissellement dans le fond d'une gaine après mise en place du tire-fond ; cette eau augmente de volume quand elle gèle et peut également conduire à une détérioration de la partie inférieure de la gaine et de la zone environnante de la traverse.

Pour remédier à ce problème, il a été proposé par la demande de brevet français N° 2 840 928 au nom de la demanderesse, de placer dans le fond de la gaine un élément compressible de faible hauteur, sous forme d'une capsule en matériau déformable, creuse intérieurement. La capsule peut présenter une collerette périphérique assurant son maintien dans la gaine par léger coincement.

Cette capsule a cependant une efficacité restant limitée en ce qui concerne l'un ou l'autre des problèmes précités.

Le document EP 1 116 826 décrit un élément compressible similaire.

La présente invention s'est donnée pour objectif de remédier à ces problèmes, essentiels en pratique et ressentis de longue date.

La gaine concernée comprend, de manière connue en soi, un filet intérieur destiné à coopérer avec le filet de l'organe de fixation, et contient un élément compressible reposant contre le fond de la gaine.

Selon l'invention, l'élément compressible a, à l'état non déformé, une hauteur au moins égale au tiers de la hauteur de la gaine.

L'inventeur a en effet pu constater que les problèmes précités résultaient, avec la capsule selon la technique antérieure, non seulement d'un volume insuffisant de cette capsule en cas de volume important d'un ou plusieurs corps étrangers rigides tels qu'un ou plusieurs gravillons, mais également, lorsque ce corps étranger est de l'eau comme cela est le cas la plupart du temps, d'un piégeage d'une partie substantielle de cette eau par le tire-fond lui-même lors de la mise en place de ce tire-fond. En effet, l'inventeur a constaté qu'au début de l'insertion du tire-fond dans la gaine, un échappement sous pression d'une partie de l'eau restait possible par l'interstice existant entre le filet du tire-fond et le filet de la gaine mais que, au fur et à mesure que cette insertion était réalisée, cet échappement se produisait en quantité de plus en plus réduite.

C'est ainsi que l'inventeur a réalisé qu'avec un élément compressible occupant une partie importante de la hauteur de la gaine, voire l'ensemble de cette hauteur, l'élément compressible aurait à la fois :
- un volume suffisant pour former une réserve de compressibilité suffisante même en cas d'un volume important d'un ou plusieurs corps étrangers rigides, tels qu'un ou plusieurs gravillons ;
- une hauteur permettant à cet élément compressible d'éliminer ou de limiter grandement la quantité d'eau de ruissellement pouvant être présente dans la gaine au moment de la mise en place du tire-fond ; cette hauteur permet que cette eau de ruissellement puisse presque intégralement s'échapper sous pression au début de l'insertion du tire-fond dans la gaine, éliminant ainsi tout piégeage d'une quantité substantielle d'eau dans le fond de la gaine, et
- une face supérieure se trouvant au contact de l'extrémité inférieure du tire-fond après mise en place complète de ce tire-fond, éliminant tout volume vide substantiel dans le fond de la gaine après cette mise en place.

Il en résulte que la gaine selon l'invention est efficace même en cas de volume important de corps étrangers rigides.

De plus, avec cette gaine, l'eau de ruissellement présente dans la gaine peut être presque intégralement éliminée lors de l'insertion du tire-fond, éliminant le risque de piéger cette eau et, par voie de conséquence, de générer, de manière immédiate ou retardée, une fissuration voire un éclatement de la traverse.

En outre, le tire-fond va porter contre l'élément compressible et le comprimer au fur et à mesure de sa mise en place, de sorte que la face supérieure de cet élément compressible est au contact de l'extrémité inférieure du tire-fond après la mise en place complète de ce tire-fond. Tout volume substantiel est ainsi éliminé dans le fond de la gaine, éliminant par voie de conséquences le risque d'accumulation d'eau dans le fond de cette gaine, susceptible de geler et donc de détériorer la gaine et la traverse par suite de l'augmentation de son volume.

L'élément compressible peut s'étendre entre le fond de la gaine et le niveau de l'extrémité supérieure du filet de la gaine, auquel cas l'élément compressible doit être légèrement comprimé pour pouvoir initier le vissage de l'organe de fixation. Cet élément compressible peut également s'étendre entre le fond de la gaine et un niveau situé en retrait de l'extrémité supérieure du filet de la gaine, sur une distance telle que quelques spires de ce filet soient laissées libres. Le vissage du tire-fond peut ainsi être initié sans que l'élément compressible ne doive être comprimé, et ne constitue donc aucun obstacle à ce vissage.

L'élément compressible peut présenter toute forme ou structure, notamment être sous forme d'une capsule creuse intérieurement. De préférence, cet élément compressible en un matériau cellulaire à cellules fermées, tel qu'un polystyrène expansé, une mousse de polyéthylène ou une mousse de polyuréthane. L'élément compressible peut ainsi être comprimé de manière parfaitement contrôlable et ne risque pas de venir interférer avec les filets de la gaine et de l'organe de fixation lors de sa compression.

L'élément compressible peut notamment être sous forme d'un cylindre.

Il peut être d'un diamètre légèrement supérieur au diamètre de la cavité de la gaine, afin de pouvoir être engagé dans cette cavité avec frottements. Cet élément compressible est ainsi retenu dans cette cavité par ces frottements.

L'invention sera bien comprise, et d'autres caractéristiques et avantages de celle-ci apparaîtront, en référence au dessin schématique annexé, représentant, à titre d'exemple non limitatif, une forme de réalisation préférée de la gaine qu'elle concerne.
La figure 1 est une vue en coupe longitudinale de cette gaine, d'un tire-fond destiné à être mis en place dans la gaine, et d'un élément compressible ; et
les figures 2 à 4 sont des vues de ces trois pièces, similaires à la figure 1, au cours de trois positions successives de mise en place du tire-fond dans la gaine.

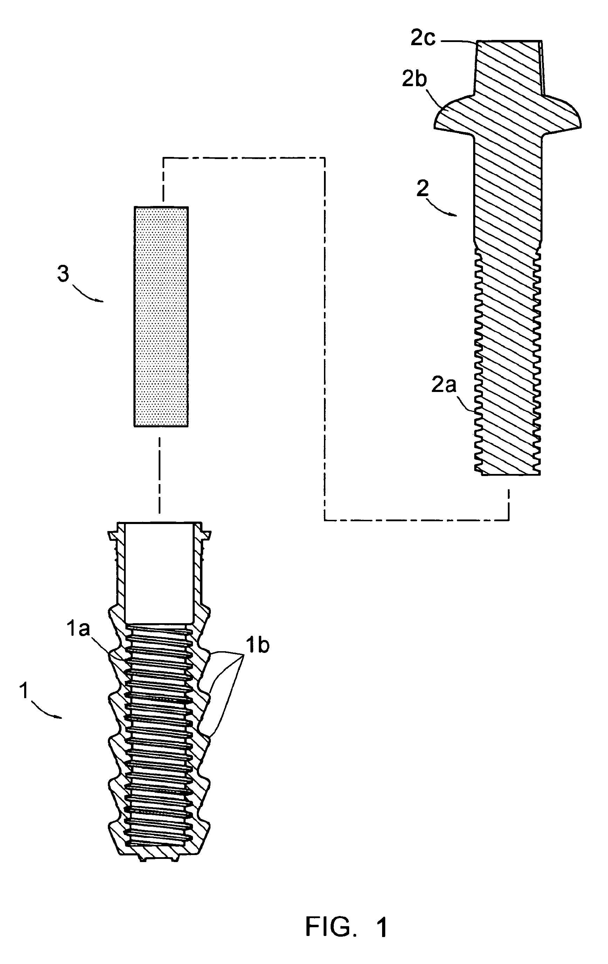

La figure 1 représente une gaine 1 permettant la mise en place d'un tire-fond 2 de fixation d'un rail ferroviaire dans une traverse de voie ferrée.

La gaine 1 est en matière synthétique et comprend intérieurement un filet 1 a destiné à coopérer avec le filet 2a du tire-fond 2. Sur sa face extérieure, elle comprend une série de saillies circulaires 1 b permettant son ancrage dans le bois ou le béton constituant la traverse.

Le tire-fond 2 comprend, outre le filet 2a, une collerette 2b permettant la fixation d'un rail et un plot carré de manoeuvre 2c.

La gaine 1 et le tire-fond 2 sont de type classique et bien connus en eux-mêmes, de sorte qu'ils ne seront pas plus particulièrement décrits.

La gaine 1 est destinée à contenir un élément 3 en matériau compressible, notamment en polystyrène expansé, en mousse de polyéthylène ou en mousse de polyuréthane. Dans l'exemple représenté, cet élément compressible 3 est sous forme d'un cylindre dont le diamètre est légèrement inférieur au diamètre interne de la gaine 1, ce cylindre 3 étant destiné à être inséré dans la gaine 1 jusqu'à venir reposer contre le fond de celle-ci, et à être fixé à cette gaine par tout moyen approprié, notamment par collage.

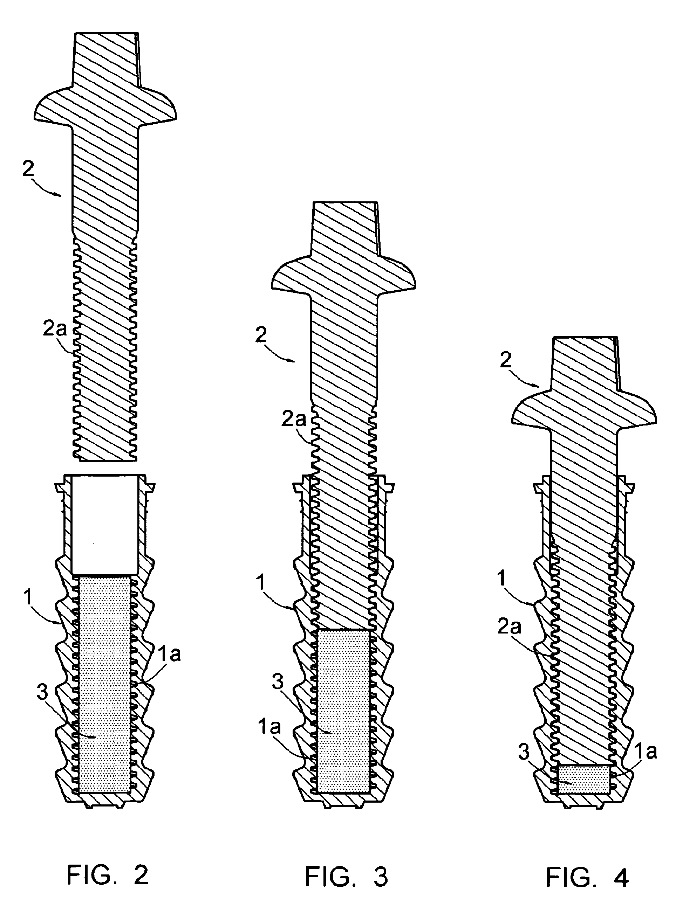

En référence à la figure 2, il apparaît qu'avant mise en place du tire-fond 2 dans la gaine 1, l'élément compressible 3 a une hauteur telle que son extrémité supérieure se trouve au niveau de l'extrémité supérieure du filet 1 a de la gaine 1.

Au moment de la mise en place du tire-fond 2, le tire-fond 2 est appuyé contre l'élément compressible 3 et est vissé de manière à amener son filet en engagement avec le filet de la gaine 1. L'élément compressible 3 cède devant le tire-fond au cours de ce vissage, se comprimant longitudinalement sous la pression exercée sur lui par le tire-fond 2 (cf. figure 3). Cette compression se poursuit jusqu'au complet engagement du tire-fond 2 dans la gaine 1 (cf. figure 4) ; dans cette position, l'extrémité supérieure de l'organe compressible 3 se trouve à proximité immédiate de l'extrémité inférieure du tire-fond 2, de sorte qu'il n'existe aucun espace libre substantiel au niveau du fond de la gaine 1.

Ainsi, avant mise en place du tire-fond 2, l'élément 3 occupe une partie importante de la hauteur de la gaine 1, de sorte qu'il permet de retirer relativement facilement un ou plusieurs gravillons qui pourraient tomber dans le volume de la gaine 1 restant libre ; il forme en tout état de cause une réserve de compressibilité suffisante pour absorber le volume d'un ou plusieurs gravillons ou autres corps étrangers rigides susceptible d'être présent dans la gaine 1.

De plus, la hauteur de l'élément 3 permet à cet élément de limiter la quantité d'eau de ruissellement pouvant être présente dans la gaine 1 au moment de la mise en place du tire-fond 2 et de maintenir cette eau dans une position surélevée dans la gaine ; cette limitation de quantité et cette surélévation permettent que l'eau de ruissellement puisse presque intégralement s'échapper sous pression au début de l'insertion du tire-fond 2 dans la gaine 1, éliminant ainsi tout piégeage de cette eau dans le fond de la gaine 1, et donc toute compression de cette eau au niveau de ce fond.

En outre, la hauteur de l'élément 3 et la compression progressive de cet élément 3 lors du vissage du tire-fond 2 permettent que la face supérieure de l'élément 3 se trouve au contact de l'extrémité inférieure du tire-fond 2 après mise en place complète de ce tire-fond 2. Tout volume vide substantiel dans le fond de la gaine 1 est ainsi éliminé après cette mise en place, ainsi que cela est visible sur la figure 4.

L'invention fournit par conséquent une gaine d'ancrage 1 à élément compressible 3 permettant de remédier à l'efficacité limitée qu'ont les gaines homologues de la technique antérieure en ce qui concerne le problème de fissuration, voire à un éclatement, du bois ou du béton constituant la traverse lors de la mise en place d'un tire-fond 2.

L'invention a été décrite ci-dessus en référence à une forme de réalisation donnée à titre de pur exemple. Il va de soi qu'elle n'est pas limitée à ces formes de réalisation mais qu'elle s'étend à toutes les formes de réalisations couvertes par les revendications ci-annexées.

## Revendications

1. Gaine (1) permettant la mise en place d'un organe de fixation dans une paroi, notamment la mise en place d'un tire-fond (2) de fixation d'un rail ferroviaire dans une traverse de voie ferrée, comprenant un filet intérieur (1a) destiné à coopérer avec le filet (2a) de l'organe de fixation (2), et contenant un élément compressible (3) reposant contre le fond de la gaine (1), ce fond étant fermé ;
**caractérisée en ce que** l'élément compressible (3) a, à l'état non déformé, une hauteur au moins égale au tiers de la hauteur de la gaine.

2. Gaine (1) selon la revendication 1, **caractérisée en ce que** l'élément compressible (3) s'étend entre le fond de la gaine (1) et un niveau situé en retrait de l'extrémité supérieure du filet (1a) de la gaine (1), sur une distance telle que quelques spires de ce filet (1 a) soient laissées libres.

3. Gaine (1) selon la revendication 1 ou la revendication 2, **caractérisée en ce que** l'élément compressible (3) est en un matériau cellulaire à cellules fermées, tel qu'un polystyrène expansé, une mousse de polyéthylène ou une mousse de polyuréthane.

4. Gaine (1) selon la revendication 3, **caractérisée en ce que** l'élément compressible (3) est sous forme d'un cylindre.

5. Gaine (1) selon l'une des revendications 1 à 4, **caractérisée en ce que** l'élément compressible (3) est d'un diamètre légèrement supérieur au diamètre de la cavité de la gaine (1), afin de pouvoir être engagé dans cette cavité avec frottements.

## Claims

1. A dowel (1) allowing a fastener to be fitted into a wall, particularly to allow a sleeper screw (2) used to attach a railway rail to be screwed into a railway sleeper, the dowel comprising an inner screw thread (1a) designed to cooperate with the screw thread (2a) of the fastener (2), and containing a compressible element (3) resting against the bottom of the dowel (1), this bottom being closed;
**characterized in that** the compressible element (3), in the undeformed state, has a height at least equal to one third of the dowel height.

2. The dowel (1) according to claim 1, **characterized in that** the compressible element (3) extends between the bottom of the dowel (1) and a level situated pulled back from the upper end of the screw thread (1 a) of the dowel (1), over a distance such that a few turns of the screw thread (1 a) are left free.

3. The dowel (1) according to claim 1 or claim 2, **characterized in that** the compressible element (3) is made of a closed-cell cellular material, such as an expanded polystyrene, a polyethylene foam or a polyurethane foam.

4. The dowel (1) according to claim 3, **characterized in that** the compressible element (3) assumes the form of a cylinder.

5. The dowel (1) according to one of claims 1 to 4, **characterized in that** the compressible element (3) has a diameter slightly larger than the diameter of the cavity of the dowel (1), to be able to be engaged in said cavity with friction.

## Patentansprüche

1. Dübel (1) zum Einbringen eines Verbindungselements in eine Wand, insbesondere zum Einbringen einer Schwellenschraube (2) zur Befestigung einer Eisenbahnschiene in eine Eisenbahnschwelle, umfassend ein Innengewinde (1 a), das dafür bestimmt ist, mit dem Gewinde (2a) des Befestigungselements (2) zusammenzuwirken, und umfassend ein zusammendrückbares Element (3), das am Boden des Dübels (1) anliegt, wobei dieser Boden geschlossen ist;
**dadurch gekennzeichnet, dass** das zusammendrückbare Element (3) im nicht verformten Zustand eine Höhe aufweist, die mindestens einem Drittel der Höhe des Dübels entspricht.

2. Dübel (1) nach Anspruch 1, **dadurch gekennzeichnet, dass** das zusammendrückbare Element (3) zwischen dem Boden des Dübels (1) und einer Ebene, die gegenüber dem oberen Ende des Gewindes (1 a) des Dübels (1) zurückgesetzt liegt, über so eine Entfernung verläuft, dass einige Gewindegänge dieses Gewindes (1 a) frei bleiben.

3. Dübel (1) nach Anspruch 1 oder Anspruch 2, **dadurch gekennzeichnet, dass** das zusammendrückbare Element (3) aus einem geschlossenporigen Material besteht, beispielsweise einem expandierten Polystyrol, einem Polyethylenschaum oder einem Polyurethanschaum.

4. Dübel (1) nach Anspruch 3, **dadurch gekennzeichnet, dass** das zusammendrückbare Element (3) die Form eines Zylinders aufweist.

5. Dübel (1) nach einem der Ansprüche 1 bis 4, **dadurch gekennzeichnet, dass** das zusammendrückbare Element (3) einen Durchmesser aufweist, der etwas größer ist als der Durchmesser des Hohlraums des Dübels (1), um mit Reibung in diesen Hohlraum gesteckt werden zu können.
